# EUROPEAN PATENT SPECIFICATION

(11) **EP 4 122 867 B1**
(45) Date of publication and mention of the grant of the patent: **27.11.2024**
(21) Application number: 22186105.7
(22) Date of filing: 20.07.2022
(51) Int. Cl.: B66C 15/04, B66C 23/90, B66C 13/44, B66C 13/46, B66C 15/06

(54) **OVERHEAD BRIDGE CRANE DETECTION SYSTEM**
BRÜCKENLAUFKRANERKENNUNGSSYSTEM
SYSTÈME DE DÉTECTION DE PONT ROULANT

(30) Priority: 22.07.2021 US 202163224568 P
(43) Date of publication of application: 25.01.2023
(73) Proprietor: Carrier Corporation, Palm Beach Gardens, FL 33418 (US)
(72) Inventor: FETTINGER, James, Fort Wayne, 46802 (US); BRUCE, Eric, Fort Wayne, 46802 (US)
(74) Representative: Dehns

(56) References cited:
- EP-A1- 3 416 015
- WO-A1-2021/084231
- CN-U- 202 671 051
- US-A1- 2018 346 294
- LIDAR AOS: "O P E R A T I N G I N S T R U C T IO NS", 1 September 2020 (2020-09-01), XP093007627, Retrieved from the Internet <URL:https://cdn.sick.com/media/docs/8/18/018/operating_instructions_aos_lidar_object_detection_systems_en_im0057018.pdf> [retrieved on 20221213]

## Description

Exemplary embodiments pertain to the art of overhead bridge crane detection. More specifically, exemplary embodiments pertain to the art of safety and/or collision avoidance for overheat bridge cranes.

Overhead bridge cranes run on elevated beams or rails (usually high) in a work zone. Overhead bridge cranes move on a pair of parallel runway beams in forward and reverse directions. Perpendicular to the runway beams is the bridge or girder (also called the "crane"). The bridge or "crane" is connected to the runway beams by two end trucks on each end of the bridge. The end trucks can be anywhere from five feet long for a small crane to nearly twenty feet long for a long span crane. The bridge moves in either direction along the runway beams. On the bridge is a trolley, which can move in either direction along the bridge. The trolley can hold a working hoist, which can move up and down. The structure of overhead bridge cranes therefore usually provide 3-axis motion-on an X-axis, Y-axis, & Z-axis.

There may be one or several overhead bridge cranes operating on the same runway. In certain instances, adjacent cranes on the same runway can encroach on the work zone and create a potential for a collision. To avoid, or at least mitigate, potential collisions Collision Avoidance Devices (CADs) may be installed on overhead bridge cranes. However, during maintenance CADs may be inactive and/or may not be configured to detect maintenance equipment. Accordingly, there is a need for a device to detect an adjacent overhead bridge crane and/or maintenance equipment during maintenance.

CN 202671051 U discloses an anti-collision system comprising a loudspeaker, a control box and a laser sensor probe, wherein the system provides an early warning. US 2018/346294 A1 discloses a load handling processing module for a crane comprising a detection system disclosing all the features of the preamble of claim 1.

According to a first aspect, a detection system for an overhead bridge crane is provided. The detection system comprising a lidar sensor in communication with a controller, wherein the lidar sensor and the controller are located in a housing and the housing has a means for removable attachment to an overhead bridge crane, and a remote unit having a means for producing a warning signal in wireless communication with the controller, the remote unit being removably attachable to a control box in a cab of an overhead bridge crane or removably attachable to a pendant or a belly box.

Optionally, the system may comprise a means for producing a warning signal in communication with the controller and located in the housing.

The warning signal may comprise one or more of a light, an auditory signal, and a haptic signal.

The controller may be programmed with a work zone area and initiates a warning signal when a signal from the lidar sensor indicates an object within the work zone area.

The lidar sensor optionally comprises at least two lidar sensors, a field of view of each of the at least two lidar sensors being combined to define a combined field of view.

The following descriptions should not be considered limiting in any way. With reference to the accompanying drawings, like elements are numbered alike. Certain exemplary embodiments will now be described in greater detail by way of example only and with reference to the accompanying drawings in which:
FIG. 1 is a top view of an overhead bridge crane;
FIG. 2 shows an overhead bridge crane detection system;
FIGs. 3A-3C shows three options for a wireless notification module; and
FIG. 4 is flowchart of a method for detecting entry of an object into a work zone area.

A detailed description of one or more embodiments are presented herein by way of exemplification and not limitation with reference to the Figures.

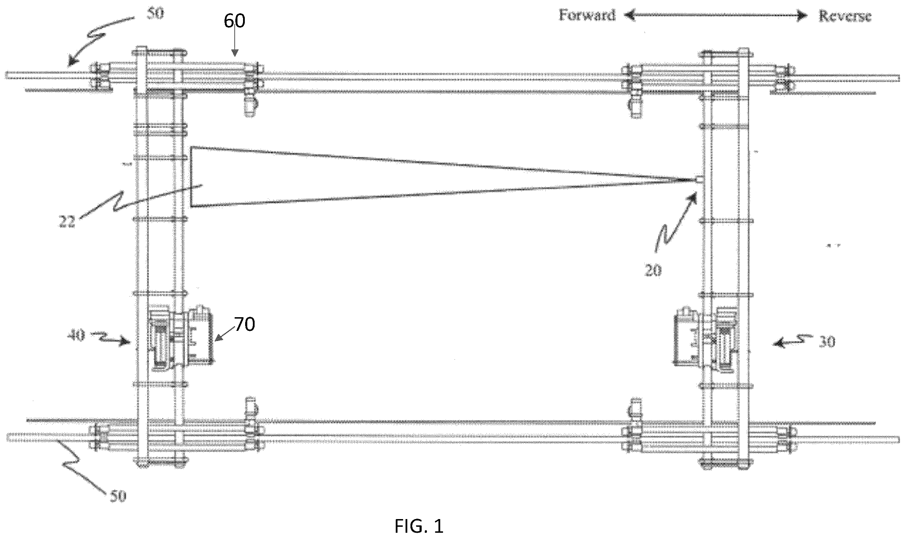

Shown in FIG. 1 are two overhead bridge cranes 30 and 40, that run along two parallel crane runway beams 50 using end trucks 60. Trolleys 70 are used to move items as desired. Lidar sensor 20 is shown on overhead bridge crane 30. Lidar sensor 20 is projecting photons 22 at overhead bridge crane 40 and receiving the reflected photons. Lidar is an acronym for light detecting and ranging.

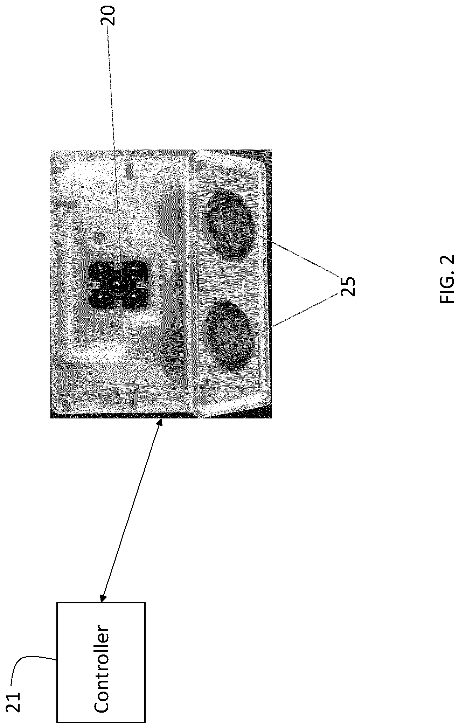

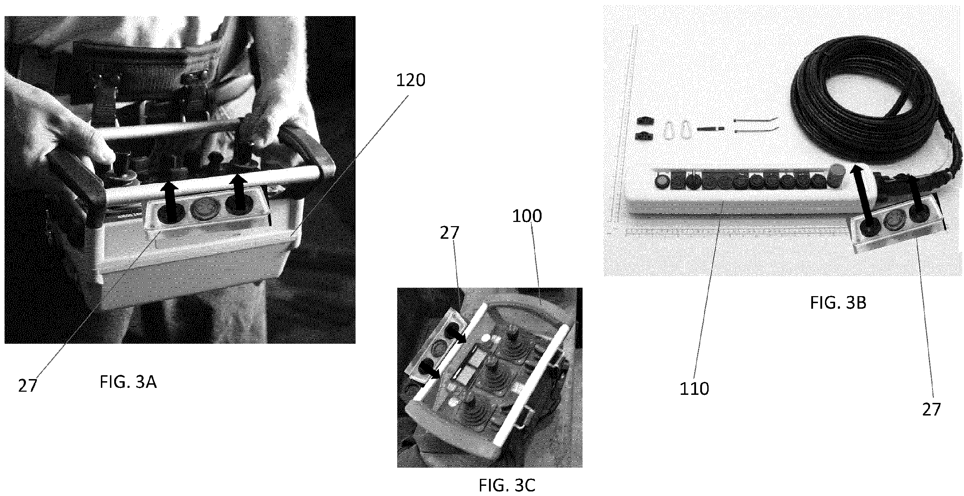

FIG. 2 shows the detection system having a lidar sensor 20 and a means for producing a warning signal, for example, warning lights 25 located in the same housing. FIGs. 3A-3C show a wireless module 27 having warning lights removably attached to control box in a cab of the overhead bridge crane 100, on a pendant 110 or on a mobile device 120 (also referred to as a "belly box"). The lidar sensor 20 is in communication with a controller 21. The controller 21 may be implemented using a general-purpose microprocessor executing a computer program stored on a storage medium to perform the operations described herein. Alternatively, controller 21 may be implemented in hardware (e.g., ASIC, FPGA) or in a combination of hardware/software.

Lidar sensors typically include a source laser or infrared Time-of-flight, a transmitting array, a receiver and a processing unit. In some embodiments, the lidar sensor includes more than one transmitting array in order to obtain the desired field of view. Exemplary fields of view are 1 to 5 degrees, or 5 to 120 degrees.

In some embodiments the lidar sensor includes a source laser, a grating coupler, a transmitting optical phase array, a receiving optical phase array, and optionally a processing unit.

Photons from the source laser enter the grating coupler. Photons from the grating coupler enter the transmitting optical phase array. Photons leave the transmitting optical phase array and enter the area being monitored. Backscattered photons (reflected photons) from the monitored area are received by the receiving optical phase array which produces a signal which may be sent to and analyzed by the processing unit or sent directly to the controller 21.

The grating coupler, transmitting optical phase array and receiving optical phase array may be part of a silicon photonic circuit. The silicon circuit is contained within a waveguide. The waveguide may be silicon, silicon nitride, or indium phosphide. The waveguide may have a thickness of 200 to 300 nanometers (nm). The waveguide is placed on top of a wafer. The wafer may be silicon-on-insulator (SOI) or indium phosphide (InP). The source laser may be located on the wafer or may be exterior to the wafer. The source laser may be a fiber laser or a diode laser. Exemplary lasers include vertical-cavity surface-emitting laser (VCSEL), edge emitting laser (EEL), and diode pumped solid state laser (DPSSL).

The source laser produces light having a wavelength of 900 nanometers (nm) to 1550 nm, or 850 nm to 950 nm. The wavelength may be chosen to minimize interference from ambient light.

The lidar sensor has a field of view. It may be desirable to combine a field of view from more than one lidar sensor in order to obtain the desired combined field of view. The signals from the lidar sensor or combination of lidar sensors are received by the controller 21. The controller 21 evaluates the signals and initiates a warning signal if an object is detected with the work zone. The work zone is a predetermined area and the size of the work zone is determined in advance and allows for safe maintenance of the overhead bridge crane.

The means for producing a warning signal may include one or more lights to generate visible warnings, one or more speakers to generate auditory signals, one or more actuators to generate haptic signals, or a combination thereof. The lidar sensor 20 and the controller 21 are located in the same housing. The means for producing the warning signal may be located in or on the same housing or located in a second housing. When the means for producing the warning signal is located in a second housing, the means for producing the warning signal is wirelessly connected to the controller 21. The second housing has attachment means to facilitate attachment to an overhead bridge crane control box which can be located in a cab of the overhead bridge crane, on a pendant or on a mobile device (also referred to as a "belly box").

It is further contemplated that the controller 21 may have a hard wired connection to the overhead bridge crane operating controls. In this case the controller could trigger an operation stop function for a hard stop. The hard wired connection may be a plug which would allow the detection system to be plugged in when needed and removed and used in a different location for maintenance of a different overhead bridge crane.

The detection system may be removably attached to an overhead bridge crane using any suitable means such as magnets, hooks, hook and loop tape (Velcro), removable adhesive, a slot and pin system, and the like.

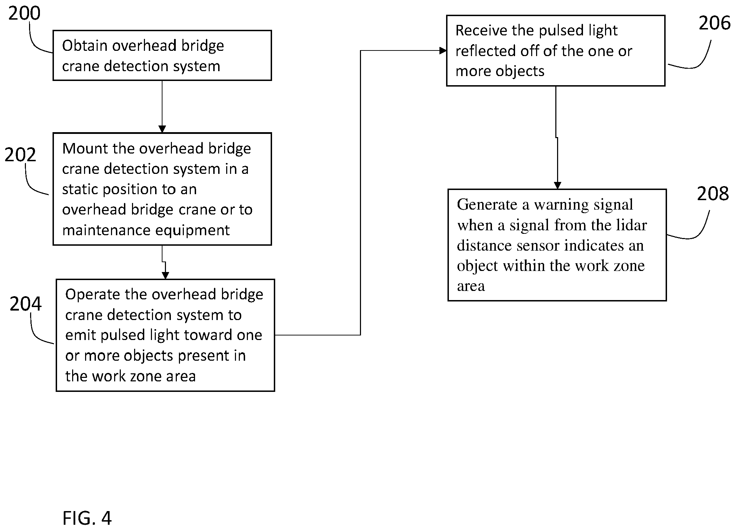

FIG. 4 is a flowchart of a method for detecting entry of an object into a work zone area, which is not the subject of the present claims. The process beings at 200 with obtaining an overhead bridge crane detection system. As described herein, the overhead bridge crane detection system may include a lidar sensor in communication with a controller. The lidar sensor and the controller are located in a housing and the housing has a means for removable attachment to an overhead bridge crane or to maintenance equipment. At 202, the overhead bridge crane detection system is mounted in a static position to the overhead bridge crane or to the maintenance equipment. At 204, the overhead bridge crane detection system is operated to emit pulsed light from the lidar sensor toward one or more obj ects present in the work zone area. At 206, the lidar sensor receives the pulsed light reflected off of the one or more objects. At 208, the controller 21 generates a warning signal when a signal from the lidar sensor indicates an object within the work zone area. The controller 21 may trigger a stop of the overhead bridge crane or the maintenance equipment in response to the warning signal

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present disclosure without departing from the scope of the invention Therefore, it is intended that the present invention not be limited to the particular embodiment disclosed as the best mode contemplated for carrying out this present invention, but that the present invention will include all embodiments falling within the scope of the claims.

## Claims

1. A detection system for an overhead bridge crane, the detection system comprising:
a lidar sensor (20) in communication with a controller (21), wherein the lidar sensor and the controller are located in a housing and the housing has a means for removable attachment to an overhead bridge crane; and
a remote unit (27) having a means for producing a warning signal in wireless communication with the controller (21),
**characterised in that** the remote unit (27) is removably attachable to a control box (100) in a cab of an overhead bridge crane or removably attachable to a pendant (110) or a belly box (120).

2. The detection system of claim 1, wherein the system further comprises a means for producing a warning signal in communication with the controller (21) and located in the housing.

3. The detection system of claim 1 or 2, wherein the warning signal comprises one or more of a light, an auditory signal, and a haptic signal.

4. The detection system of any preceding claim, wherein the controller (21) is programmed with a work zone area and initiates a warning signal when a signal from the lidar sensor (20) indicates an object within the work zone area.

5. The detection system of any preceding claim, wherein the lidar sensor (20) comprises at least two lidar sensors, a field of view of each of the at least two lidar sensors being combined to define a combined field of view.

## Patentansprüche

1. Erkennungssystem für einen Brückenlaufkran, wobei das Erkennungssystem Folgendes umfasst:
einen Lidarsensor (20) in Kommunikation mit einer Steuerung (21),
wobei sich der Lidarsensor und die Steuerung in einem Gehäuse befinden und das Gehäuse ein Mittel zur abnehmbaren Befestigung an einem Brückenlaufkran aufweist; und
eine Ferneinheit (27), die ein Mittel zum Erzeugen eines Warnsignals in drahtloser Kommunikation mit der Steuerung (21) aufweist,
**dadurch gekennzeichnet, dass** die Ferneinheit (27) abnehmbar an einem Steuerkasten (100) in einer Kabine eines Brückenlaufkrans befestigbar ist oder abnehmbar an einem Hängegerät (110) oder einem Bauchkasten (120) befestigbar ist.

2. Erkennungssystem nach Anspruch 1, wobei das System ferner ein Mittel zum Erzeugen eines Warnsignals in Kommunikation mit der Steuerung (21) umfasst und sich in dem Gehäuse befindet.

3. Erkennungssystem nach Anspruch 1 oder 2, wobei das Warnsignal eines oder mehrere von einem Licht, einem akustischen Signal und einem haptischen Signal umfasst.

4. Erkennungssystem nach einem der vorhergehenden Ansprüche, wobei die Steuerung (21) mit einem Arbeitszonenbereich programmiert ist und ein Warnsignal auslöst, wenn ein Signal von dem Lidarsensor (20) ein Objekt innerhalb des Arbeitszonenbereichs anzeigt.

5. Erkennungssystem nach einem der vorhergehenden Ansprüche, wobei der Lidarsensor (20) mindestens zwei Lidarsensoren umfasst, wobei ein Sichtfeld von jedem der mindestens zwei Lidarsensoren kombiniert wird, um ein kombiniertes Sichtfeld zu definieren.

## Revendications

1. Système de détection de pont roulant, le système de détection comprenant :
un capteur lidar (20) en communication avec le dispositif de commande (21), dans lequel le capteur lidar et le dispositif de commande sont situés dans un carter et le carter a un moyen d'attelage amovible à un pont roulant ; et
une unité à distance (27) ayant un moyen de production d'un signal d'avertissement en communication sans fil avec le dispositif de commande (21),
**caractérisé en ce que** l'unité à distance (27) est attelable de manière amovible au boîtier de commande (100) dans une cabine d'un pont roulant ou attelable de manière amovible à un plafonnier (110) ou à un boîtier frontal (120).

2. Système de détection selon la revendication 1, dans lequel le système comprend également un moyen de production d'un signal d'avertissement en communication avec le dispositif de commande (21) et situé dans le carter.

3. Système de détection selon la revendication 1 ou 2, dans lequel le signal d'avertissement comprend un ou plusieurs voyants, un signal acoustique et un signal haptique.

4. Système de détection selon une quelconque revendication précédente, dans lequel le dispositif de commande (21) est programmé avec un zone de travail et active un signal d'avertissement lorsqu'un signal depuis le capteur lidar (20) indique un objet dans la zone de travail.

5. Système de détection selon une quelconque revendication précédente, dans lequel le capteur lidar (20) comprend au moins deux capteurs lidar, un champ de vision de chacun de l'au moins deux capteurs combinés pour définir un champ de vision combiné.
